# EUROPEAN PATENT SPECIFICATION

(11) **EP 3 739 423 B1**
(45) Date of publication and mention of the grant of the patent: **01.03.2023**
(21) Application number: 18900262.9
(22) Date of filing: 25.10.2018
(51) Int. Cl.: G05G 5/03, B60K 20/02, G05G 5/06, G05G 1/04

(54) **OPERATION DEVICE**
BEDIENUNGSVORRICHTUNG
DISPOSITIF D'ACTIONNEMENT

(30) Priority: 09.01.2018 JP 2018001177
(43) Date of publication of application: 18.11.2020
(73) Proprietor: Alps Alpine Co., Ltd., Ota-ku Tokyo 145-8501 (JP)
(72) Inventor: TAKEDA, Yu, Tokyo 145-8501 (JP); OGAWA, Toshio, Tokyo 145-8501 (JP); UENOMACHI, Takashi, Tokyo 145-8501 (JP); NATSUSAKA, Hayate, Tokyo 145-8501 (JP)
(74) Representative: Maiwald GmbH
(86) International application number: PCT/JP2018/039589
(87) International publication number: WO 2019/138645

(56) References cited:
- EP-A1- 1 615 250
- EP-A1- 2 902 665
- EP-A1- 3 115 648
- WO-A1-2017/138429
- WO-A1-2017/138429
- JP-A- 2015 143 910
- JP-A- 2015 149 058

## Description

### TECHNICAL FIELD

The present disclosure relates to an operation device.

### BACKGROUND ART

There is known an electronic shifter that generates a click feeling by pressing an actuator against a cam surface with a compression coil spring.
EP 2 902 665 A1 describes a multi-directional input operation device including an operation member, a support body, position detecting means, mutually facing movable-side magnetic bodies, a motor, a driving control unit, and a coupling mechanism.
WO 2017/138429 A1 describes an operating device having an operating member capable of a tilting movement, a support, a first movable member, a second movable member that work in connection the operating member. Having a first magnetic body provided to the first movable member, a second magnetic body provided to the second movable member and a permanent magnet supported by the support.
EP 3 115 648 A1 describes a multi-directional operating device including an operating member, a support body, movable members, a pair of movable magnetic members, a facing magnetic member, a plurality of stopper portions, a drive member, and a cam member.

### Citation List

### Patent Literature

PTL 1: Japanese Laid-Open Patent Publication No. 2002-144905

### SUMMARY OF THE INVENTION

### [Technical Problem]

In the conventional technique as described above, it is difficult to improve the durability of the operation device while also reducing the size of the operation device. In a configuration using a compression coil spring, a sliding part for making a click feeling is provided, which is disadvantageous in terms of durability, and, in addition, because the actuator is configured to be biased by the compression coil spring, the size of the operation device tends to increase.

Accordingly, an object of one aspect of the present invention is to improve the durability of the operation device while also reducing the size of the operation device.

### [Solution to Problem]

The invention is set out in the appended set of claims.

One aspect of the invention provides an operation device that includes:
an operation member that is configured to be tilted;
a support body configured to support the operation member, and to allow the operation member to be tilted from a reference position in one direction of a first axis direction;
a permanent magnet configured to tilt to a first side in accordance with a tilt operation of the operation member in the one direction;
a first magnetic body configured to face the first side of the permanent magnet in an initial state in which the operation member is at the reference position, the first magnetic body being configured to tilt in accordance with the tilt operation of the operation member from the reference position in the one direction, and being configured to be restricted from tilting in accordance with a tilt operation of the operation member from the reference position in another direction of the first axis direction;
a second magnetic body configured to face a second side, opposite to the first side, of the permanent magnet in the initial state, and being configured to be restricted from tilting in accordance with the tilt operation of the operation member from the reference position in the one direction; and
a third magnetic body configured to, in the initial state, face the permanent magnet such that the third magnetic body is farther away from the permanent magnet toward the first side than the first magnetic body.

### [Effect of Invention]

In an aspect, the durability of the operation device can be improved while also reducing the size of the operation device.

### BRIEF DESCRIPTION OF THE DRAWINGS

FIG. 1 is an external perspective view of a shift device 100 according to an embodiment;
FIG. 2 is an explanatory drawing illustrating an example of shift operations of the shift device 100;
FIG. 3 is a perspective view illustrating a state in which a cover 111 of the shift device 100 of FIG. 1 is removed;
FIG. 4 is a perspective view of an internal structure including an attractive force generating mechanism 1 and a support body 3;
FIG. 5 is a perspective view of the attractive force generating mechanism 1;
FIG. 6 is a perspective view illustrating a state in which a fifth magnetic body and auxiliary permanent magnets are removed from the attractive force generating mechanism 1 of FIG. 5;
FIG. 7 is a perspective view illustrating a lever base portion 22 of an operation lever 2 with a permanent magnet 6 being attached;
FIG. 8 is a perspective view illustrating the inside of a case body 110;
FIG. 9 is a perspective view of the support body 3 alone;
FIG. 10A is an explanatory drawing schematically illustrating a side view of the attractive force generating mechanism 1; and
FIG. 10B is an explanatory drawing schematically illustrating a side view of the attractive force generating mechanism 1.

### MODES FOR CARRYING OUT THE INVENTION

Hereinafter, an embodiment will be described in detail with reference to the accompanying drawings.

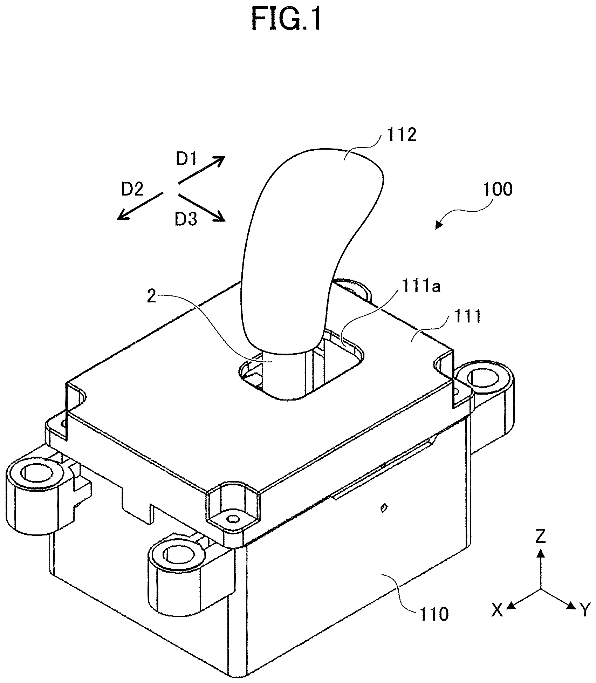

FIG. 1 is an external perspective view of a shift device 100 according to an embodiment. In FIG. 1, for example, three tilting directions D1 to D3 are illustrated. In FIG. 1, three orthogonal axes X, Y, and Z are defined. The Z axis corresponds to the height direction, and the Z1 side corresponds to the "upper side". In the installed state of the shift device 100, the Z axis does not necessarily have to be parallel to the gravity direction.

The shift device 100 is preferably provided on a vehicle. However, the shift device 100 may be provided in an aircraft, a railway car, or the like, or may be applied to a game machine.

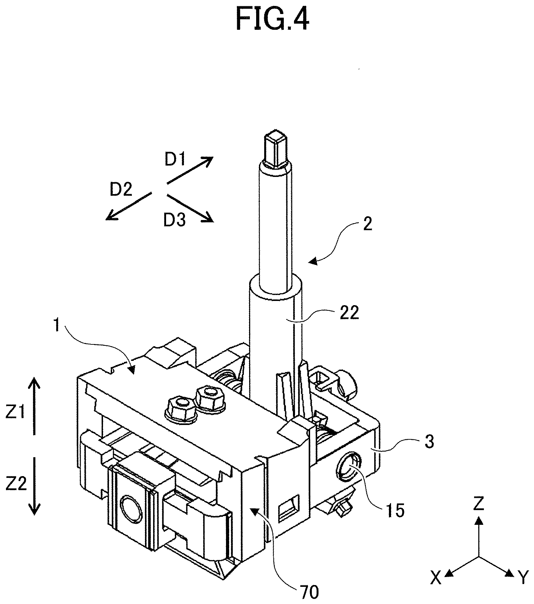

The shift device 100 includes an operation lever 2 (an example of an operation member) that can be tilted, a support body 3 (see FIG. 4), a case body 110, and a cover 111 that covers an opening provided on the upper side of the case body 110. The case body 110 accommodates the attractive force generating mechanism 1 to be described below. Note that the case body 110 is formed by injection molding of a resinous material such as polybutylene terephthalate (PBT). The case body 110 and the cover 111 form a housing of the shift device 100.

Like the case body 110, the cover 111 is molded from a resin such as polybutylene terephthalate (PBT). A through-hole 111a is formed in a central portion of the cover 111, through which the operation lever 2 is inserted and a tip, which is a part of the operation lever 2, protrudes from the top surface of the cover 111. A shift knob 112 that is gripped by a user when tilting the operation lever 2 is attached to an end of the operation lever 2.

The shift knob 112 is made of a resin such as an ABS (acrylonitrile butadiene styrene) resin.

The shift device 100 is a shift-by-wire system, not a mechanical linkage system in which the shift knob 112 is directly connected to a gearbox. Because the shift device 100 of the shift-by-wire system does not require a mechanical structure such as a link mechanism, downscaling is achieved. Accordingly, the placement of the shift device 100 within the vehicle can have flexibility. Further, because the operation lever 2 can be operated with a relatively small force, the user can easily perform an operation for shifting gears.

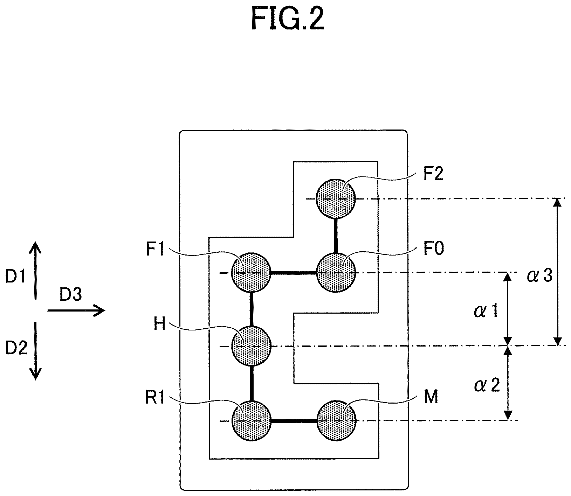

FIG. 2 is an explanatory drawing of an example of shift operation of the shift device 100. FIG. 2 schematically illustrates tilt amounts α1, α2, α3 from the home position H. Actually, the tilt amounts α1, α2, α3 are not the amounts along the straight line as illustrated in FIG. 2, but are the amounts along an arcuate locus of rotation around a rotation shaft 15.

When the operation lever 2 is tilted from the home position H (an example of a reference position) in the first tilting direction (direction D1, an example of a first axis direction), the operation lever 2 is moved to a position F1. The position F1 is a first position F1 in the first tilting direction-side (direction D1). When the operation lever 2 is tilted from the first position F1 further in the first tilting direction (direction D1) upon being tilted to a third tilting direction (direction D3, an example of a second axis direction crossing the first tilting direction), the operation lever 2 is moved to a position F2 by way of a position F0. The position F2 is the second position F2 in the first tilting direction (direction D1). When the operation to tilt the operation lever 2 to the first position F1 or the second position F2 in the first tilting direction (direction D1) is released, the current position is maintained (that is, the first position F1 or the second position F2 in the first tilting direction-side is a stationary position).

When the operation lever 2 is tilted from the home position H in the second tilting direction (direction D2), the operation lever 2 is moved to a position R1. The position R1 is a first position R1 in the second tilting direction (direction D2). When the operation to tilt the operation lever 2 located at the first position R1 in the second tilting direction (direction D2) is released, the current position is maintained.

When the operation lever 2 is further tilted from the position R1 in the third tilting direction (direction D3), the operation lever 2 is moved to a position M. When the operation to tilt the operation lever 2 located at the position M is released, the current position is maintained.

It should be noted that the shift operation is not limited to the example as illustrated in FIG. 2, and can be achieved in various manners.

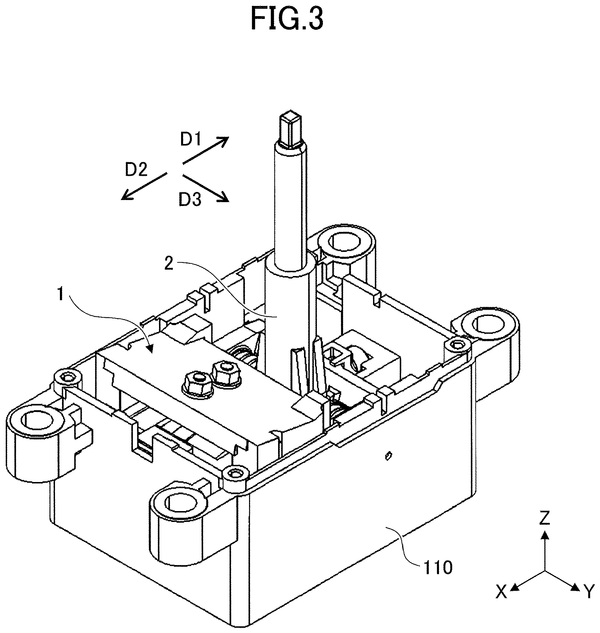

FIG. 3 is a perspective view illustrating a state in which the cover 111 of the shift device 100 of FIG. 1 is removed. In FIG. 3 and subsequent drawings, the shift knob 112 is omitted for clarity.

The shift device 100 includes the attractive force generating mechanism 1. Hereinafter, the attractive force generating mechanism 1 will be explained with reference to FIG. 4 and the like.

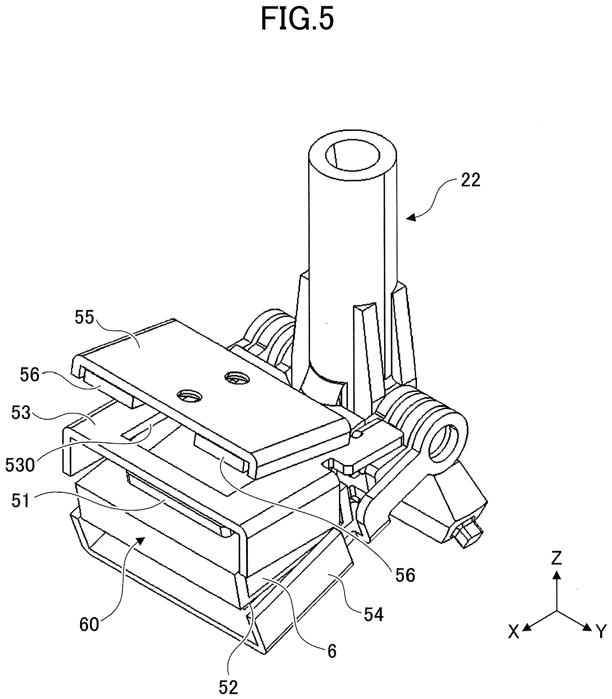

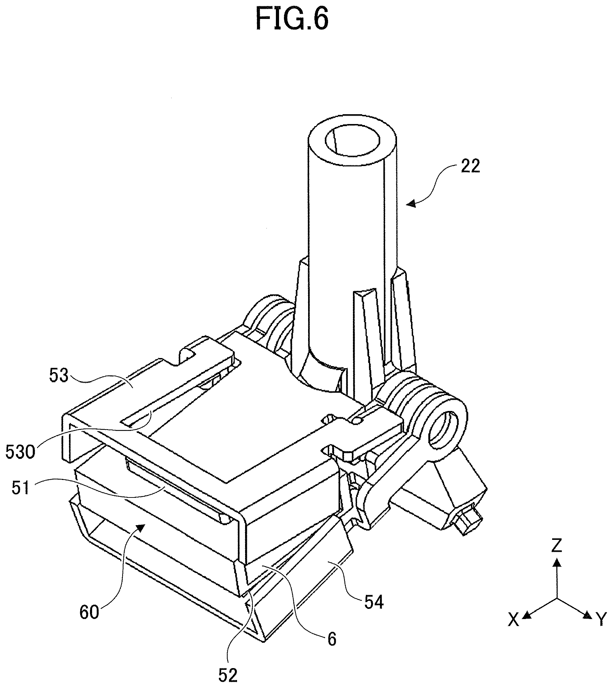

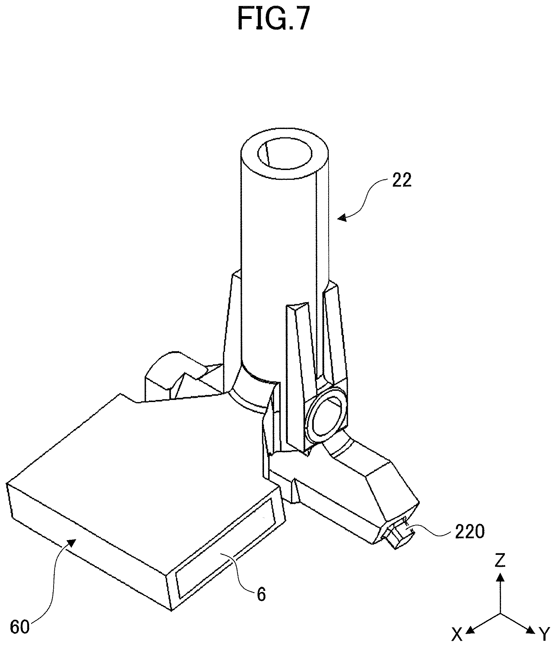

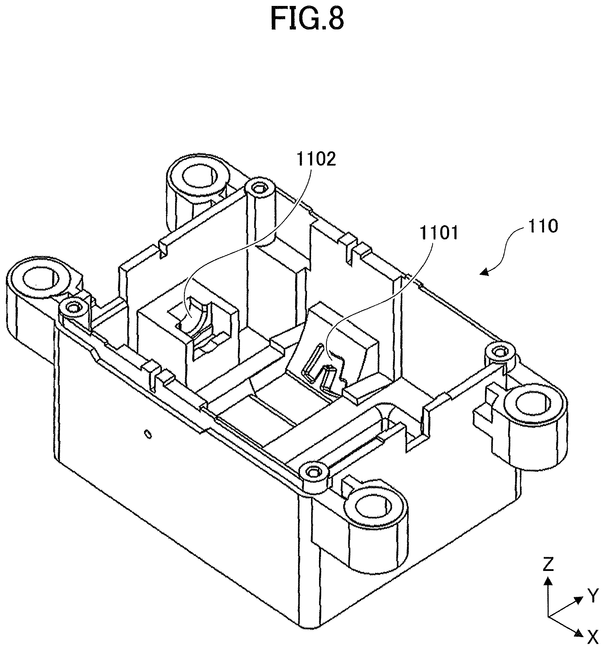

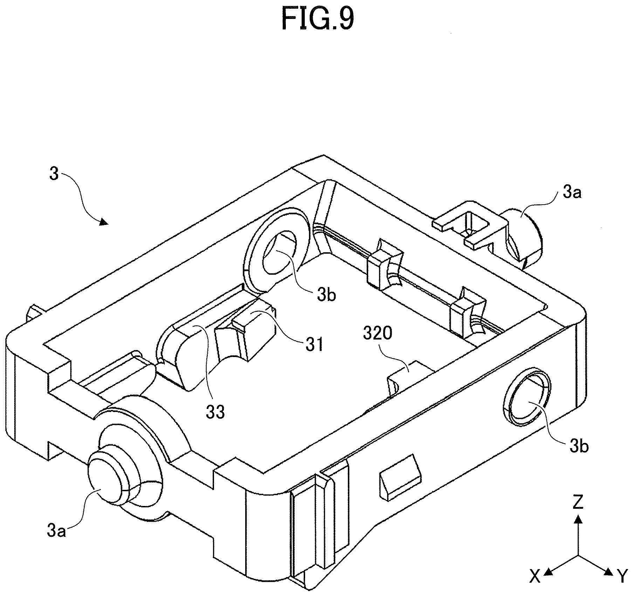

FIG. 4 is a perspective view illustrating an internal structure including the attractive force generating mechanism 1 and the support body 3. FIG. 5 is a perspective view of the attractive force generating mechanism 1. FIG. 6 is a perspective view illustrating a state in which a fifth magnetic body 55 and auxiliary permanent magnets 56 are removed from the attractive force generating mechanism 1 of FIG. 5. FIG. 7 is a perspective view illustrating the lever base portion 22 of the operation lever 2 with a permanent magnet 6 being attached. FIG. 8 is a perspective view illustrating the inside of the case body 110. FIG. 9 is a perspective view of the support body 3 alone.

The attractive force generating mechanism 1 is supported by the support body 3. The support body 3 is formed by, for example, a non-magnetic body such as a die-cast zinc. The support body 3 is rotatably supported on the case body 110. The support body 3 is in a form of a frame as illustrated in FIG. 9, and capable of rotating, with shaft portions 3a, about the axis in the X direction with respect to the case body 110. Also, the support body 3 includes, as illustrated in FIG. 9, bearing portions 3b rotatably supporting the rotation shaft 15 (see FIG. 4). The support body 3 supports the operation lever 2 with the rotation shaft 15 so as to allow the operation lever 2 to be tilted in the first tilting direction (direction D1, an example of one direction in the first axis direction) and the second tilting direction (direction D2, an example of another direction in the first axis direction).

Hereinafter, as illustrated in FIG. 4, the XY plane passing through the center of the permanent magnet 6 in the vertical direction when the operation lever 2 is at the reference position is adopted as a reference plane. A Z1 side (an example of a first side) and a Z2 side (an example of a second side opposite to the first side) are defined with respect to the reference plane.

As illustrated in FIG. 5, the attractive force generating mechanism 1 includes the permanent magnet 6, a first magnetic body 51, a second magnetic body 52, a third magnetic body 53, a fourth magnetic body 54, and a fifth magnetic body 55.

The permanent magnet 6 tilts to the Z1 side in accordance with a tilt operation of the operation lever 2 in the first tilting direction. In the present embodiment, for example, the operation lever 2 includes the lever base portion 22 as illustrated in FIG. 4 and FIG. 7, and the permanent magnet 6 is provided in a magnet holder 60 integrally formed with the lever base portion 22. As illustrated in FIG. 4, the lever base portion 22 is rotatably supported on the support body 3 with the rotation shaft 15. For example, two permanent magnets 6 may be arranged side by side in the Y direction. In this case, the polarities of the adjacent sides of the two permanent magnets 6 in the Y direction may be different from each other. When the operation lever 2 is tilted in the first tilting direction by a tilt operation in the first tilting direction, the magnet holder 60 tilts to the Z1 side, so that the permanent magnet 6 in the magnet holder 60 tilts to the Z1 side.

It should be noted that the lever base portion 22 includes a protruding portion 220 (see FIG. 7) that fits in a restriction groove 1101 (see FIG. 8) formed in the case body 110, and the lever base portion 22 is movable with respect to the case body 110 in such a manner that the protruding portion 220 moves only along the groove shape defined by the restriction groove 1101. The restriction groove 1101 is formed so as to achieve the shift operation (shift pattern) as illustrated in FIG. 2. FIG. 8 illustrates a bearing portion 1102 (bearing portion at one side in the X direction) that axially supports the shaft portion 3a (see FIG. 9) of the support body 3 in a rotatable manner.

Also, the permanent magnet 6 tilts to the Z2 side in accordance with a tilt operation of the operation lever 2 in the second tilting direction. When the operation lever 2 is tilted in the second tilting direction by a tilt operation in the second tilting direction, the magnet holder 60 tilts to the Z2 side, so that the permanent magnet 6 in the magnet holder 60 tilts to the Z2 side.

The first magnetic body 51 faces the permanent magnet 6 at the Z1 side in an initial state in which the operation lever 2 is at the reference position (which may be hereinafter simply referred to as "initial state"). Incidentally, in the initial state, the first magnetic body 51 may be slightly separated from the upper surface of the magnet holder 60 to the Z1 side.

The first magnetic body 51 is supported so as to be rotatable about the rotation shaft 15 of the lever base portion 22. It should be noted that a portion of the first magnetic body 51 axially supported around the rotation shaft 15 may be formed by resin and the like. The first magnetic body 51 tilts in accordance with a tilt operation of the operation lever 2 from the reference position in the first tilting direction. In other words, when the operation lever 2 is tilted in the first tilting direction by a tilt operation in the first tilting direction, the magnet holder 60 comes into contact with the first magnetic body 51, and the first magnetic body 51 and the magnet holder 60 tilt together to the Z1 side.

The first magnetic body 51 is restricted from tilting in accordance with a tilt operation of the operation lever 2 from the reference position in the second tilting direction. In other words, even when the operation lever 2 is tilted in the second tilting direction by a tilt operation in the second tilting direction, the first magnetic body 51 does not tilt to the Z2 side. Such restriction can be achieved with, for example, a mechanical stopper (not illustrated). In the present embodiment, for example, the support body 3 has a first stopper 31 (see FIG. 9) on a frame side surface, and the first magnetic body 51 comes into contact with the first stopper 31 from the upper side, so that the first magnetic body 51 is prevented from tilting to the Z2 side. In the initial state, the first magnetic body 51 is restricted from tilting to the Z1 side by the attraction force from the permanent magnet 6 and is in contact with the first stopper 31.

Except portions axially supported around the rotation shaft 15, the second magnetic body 52 is symmetrical to the first magnetic body 51 with reference to the reference plane interposed therebetween. The second magnetic body 52 faces the permanent magnet 6 at the Z2 side in the initial state. Incidentally, in the initial state, the second magnetic body 52 may be slightly separated from the lower surface of the magnet holder 60 to the Z2 side.

The second magnetic body 52 is supported so as to be rotatable about the rotation shaft 15 of the lever base portion 22. It should be noted that a portion of the first magnetic body 51 axially supported around the rotation shaft 15 may be formed by resin and the like. The second magnetic body 52 tilts in accordance with a tilt operation of the operation lever 2 from the reference position in the second tilting direction. In other words, when the operation lever 2 is tilted in the second tilting direction by a tilt operation in the second tilting direction, the magnet holder 60 comes into contact with the second magnetic body 52, and the second magnetic body 52 and the magnet holder 60 tilt together to the Z2 side.

The second magnetic body 52 is restricted from tilting in accordance with a tilt operation of the operation lever 2 from the reference position in the first tilting direction. In other words, even when the operation lever 2 is tilted in the first tilting direction by a tilt operation in the first tilting direction, the second magnetic body 52 does not tilt to the Z1 side. Such restriction can be achieved with, for example, a mechanical stopper (not illustrated). In the present embodiment, for example, the support body 3 has a second stopper (a lower surface of a portion 320 in FIG. 9) on the frame side surface, and the second magnetic body 52 comes into contact with the second stopper from the lower side, so that the second magnetic body 52 is prevented from tilting to the Z1 side. In the initial state, the second magnetic body 52 is restricted from tilting to the Z2 side by the attraction force from the permanent magnet 6 and is in contact with the second stopper.

As illustrated in FIG. 5, in the initial state, the third magnetic body 53 is farther away from the permanent magnet 6 toward the Z1 side than the first magnetic body 51. In the initial state, the third magnetic body 53 faces the permanent magnet 6 from the Z1 side.

The third magnetic body 53 is supported so as to be rotatable about the rotation shaft 15 of the lever base portion 22. It should be noted that a portion of the third magnetic body 53 axially supported around the rotation shaft 15 may be formed by resin and the like.

When the operation lever 2 is tilted in the first tilting direction by a tilt operation in the first tilting direction, the third magnetic body 53 is attracted to the permanent magnet 6 and the first magnetic body 51 which integrally tilt. In the present embodiment, for example, as illustrated in FIG. 5, the third magnetic body 53 has a notched portion 530 in the central portion, and the third magnetic body 53 becomes flush with the first magnetic body 51 in such a manner that the first magnetic body 51 becomes seated in the notched portion 530. In this case, the magnetic flux from the permanent magnet 6 integrates the permanent magnet 6, the first magnetic body 51, and the third magnetic body 53. When the permanent magnet 6, the first magnetic body 51, and the third magnetic body 53 are integrated, the operation lever 2 is located at the first position F1 in the first tilting direction-side.

The third magnetic body 53 is formed so that the magnet holder 60 can come into contact with the third magnetic body 53 from a lower side. In the present embodiment, for example, the size of the notched portion 530 is smaller than the magnet holder 60, and the magnet holder 60 can come into contact with the third magnetic body 53 from a lower side. In this case, when the operation lever 2 is further tilted in the first tilting direction in a state in which the permanent magnet 6 in the magnet holder 60 is attracted to the third magnetic body 53 (a state in which the operation lever 2 is at the first position F1 in the first tilting direction-side), the third magnetic body 53 and the magnet holder 60 tilt together in the first tilting direction .

In accordance with a tilt operation of the operation lever 2 from the first position F1 in the first tilting direction-side in the first tilting direction, the third magnetic body 53 tilts. In other words, when the operation lever 2 is tilted from the first position F1 in the first tilting direction-side in the first tilting direction by a tilt operation in the first tilting direction, the third magnetic body 53, together with the first magnetic body 51 and the magnet holder 60, tilt to the Z1 side.

The third magnetic body 53 is restricted from being tilted in accordance with a tilt operation of the operation lever 2 from the first position F1 in the second tilting direction. In other words, the third magnetic body 53 does not tilt to the Z2 side even when the operation lever 2 is tilted in the second tilting direction by a tilt operation in the second tilting direction. Such restriction can be achieved with, for example, a mechanical stopper (not illustrated). In the present embodiment, for example, the support body 3 has a third stopper 33 (see FIG. 9) on the frame side surface, and the third magnetic body 53 comes into contact with the third stopper 33 from the upper side, so that the third magnetic body 53 is prevented from tilting to the Z2 side. In the initial state, with the attraction force from the permanent magnet 6 and the gravity acting on the third magnetic body 53, the third magnetic body 53 is restricted from tilting to the Z1 side, and thereby remains in contact with the third stopper 33.

Except portions axially supported around the rotation shaft 15, the fourth magnetic body 54 is symmetrical to the third magnetic body 53 with reference to the reference plane interposed therebetween. As illustrated in FIG. 5, in the initial state, the fourth magnetic body 54 is farther away from the permanent magnet 6 toward the Z2 side than the second magnetic body 52. In the initial state, the fourth magnetic body 54 faces the permanent magnet 6 from the Z2 side.

The fourth magnetic body 54 is supported so as to be rotatable about the rotation shaft 15 of the lever base portion 22. It should be noted that a portion of the fourth magnetic body 54 axially supported around the rotation shaft 15 may be formed by resin and the like.

When the operation lever 2 is tilted in the second tilting direction by a tilt operation in the second tilting direction, the fourth magnetic body 54 is attracted to the permanent magnet 6 and the second magnetic body 52 which tilt in an integrated manner. In the present embodiment, like the third magnetic body 53, for example, the fourth magnetic body 54 has a notched portion (not visible in the drawings) in the central portion, and the fourth magnetic body 54 becomes flush with the second magnetic body 52 in such a manner that the second magnetic body 52 becomes seated in the notched portion. At this occasion, the magnetic flux from the permanent magnet 6 integrates the permanent magnet 6, the second magnetic body 52, and the fourth magnetic body 54. When the permanent magnet 6, the second magnetic body 52, and the third magnetic body 53 are integrated, the operation lever 2 is located at the first position R1 in the second tilting direction-side.

The fourth magnetic body 54 is restricted from tilting in accordance with a tilt operation of the operation lever 2 from the first position R1 in the first tilting direction. In other words, even when the operation lever 2 is tilted in the first tilting direction by a tilt operation in the first tilting direction, the fourth magnetic body 54 does not tilt to the Z1 side. Such restriction can be achieved with, for example, a mechanical stopper (not illustrated). In the present embodiment, for example, the support body 3 has a fourth stopper (in a form similar to the third stopper 33 not visible in FIG. 9) on the frame side surface, and the fourth magnetic body 54 comes into contact with the fourth stopper from the lower side, so that the fourth magnetic body 54 is prevented from tilting to the Z1 side. In the initial state, with the attraction force from the permanent magnet 6, the fourth magnetic body 54 is restricted from tilting to the Z2 side, and is held in the state of being in contact with the fourth stopper.

In the present embodiment, for example, the fourth magnetic body 54 is rotatably supported around the rotation shaft 15 of the lever base portion 22, but does not need to tilt to the Z2 side. However, in a modification, like the third magnetic body 53, the fourth magnetic body 54 may tilt in accordance with a tilt operation of the operation lever 2 from the first position R1 in the second tilting direction-side in the second tilting direction. In this case, when the operation lever 2 is tilted from the first position R1 in the second tilting direction-side in the second tilting direction by a tilt operation in the second tilting direction, the fourth magnetic body 54 tilts to the Z2 side, together with the second magnetic body 52 and the magnet holder 60. In another modification, the fourth magnetic body 54 may be supported around the rotation shaft 15 of the lever base portion 22 in a non-rotatable manner.

As illustrated in FIG. 5, in the initial state, the fifth magnetic body 55 is farther away from the permanent magnet 6 toward the Z1 side than the third magnetic body 53. In the initial state, the fifth magnetic body 55 faces the third magnetic body 53 from the Z1 side.

As illustrated in FIG. 4, the fifth magnetic body 55 is fixed to the support body 3 with the holder 70. Alternatively, the fifth magnetic body 55 may be supported around the rotation shaft 15 of the lever base portion 22 in a non-rotatable manner.

As illustrated in FIG. 5, the auxiliary permanent magnets 56 may be attached to the fifth magnetic body 55. In this case, when the operation lever 2 is at the second position F2 in the first tilting direction, the magnetic flux from the auxiliary permanent magnets 56 and the permanent magnet 6 integrates the fifth magnetic body 55, the first magnetic body 51, and the third magnetic body 53.

In a modification, the auxiliary permanent magnets 56 may be omitted. In this case, the magnetic flux from the permanent magnet 6 integrates the fifth magnetic body 55, the first magnetic body 51, and the third magnetic body 53. In a case where the auxiliary permanent magnets 56 are provided, the relationship of forces such as the magnetic force of the auxiliary permanent magnets 56, the magnetic force of the permanent magnet 6, and the gravity acting on each of them are properly set, so that the first magnetic body 51 and the third magnetic body 53 are not attracted to the auxiliary permanent magnets 56 when the operation lever 2 is at the first position F1 in the first tilting direction-side.

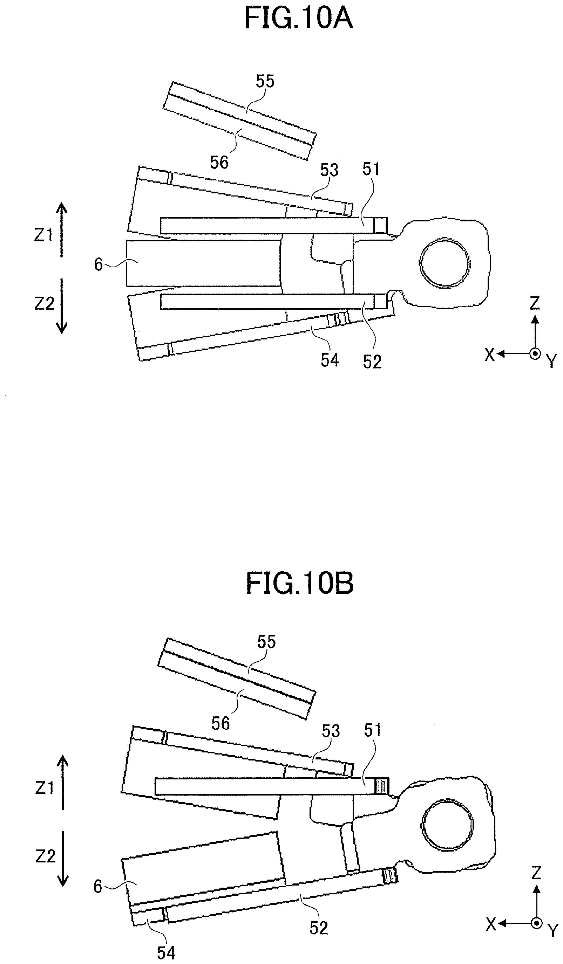

Subsequently, the operation of the attractive force generating mechanism 1 (mechanism for making a click feeling) will be described with reference to FIG. 10A and FIG. 10B.

FIG. 10A and FIG. 10B are explanatory drawings schematically illustrating side views of the attractive force generating mechanism 1, in which FIG. 10A illustrates an initial state, and FIG. 10B illustrates a state in which the operation lever 2 is at the first position R1 in the second tilting direction-side. It should be noted that FIG. 10A and FIG. 10B are explanatory drawings, and detailed shapes may be different from the foregoing drawings.

When the operation lever 2 is tilted in the second tilting direction from the initial state as illustrated in FIG. 10A, as described above, the second magnetic body 52 and the permanent magnet 6 tilt to the Z2 side. At this occasion, the permanent magnet 6 moves away to the Z2 side from the first magnetic body 51 which is restricted from tilting to the Z2 side. Therefore, the first magnetic body 51 is separated from the permanent magnet 6. At this point in time, a click feeling is generated. That is, when the first magnetic body 51 is pulled apart from the permanent magnet 6, the attraction force decreases sharply, and when the operator tilts the operation lever 2 in the second tilting direction, the operating resistance felt by the operator decreases sharply, which generates a click feeling. Also, the second magnetic body 52 and the permanent magnet 6 are attracted to the fourth magnetic body 54 (see FIG. 10B), and the operation lever 2 is maintained at the first position R1 in the second tilting direction-side.

In this manner, when the operation lever 2 is tilted from the initial state in the second tilting direction, the permanent magnet 6 and the second magnetic body 52 are separated from the first magnetic body 51 to the Z2 side, and the permanent magnet 6 attracts the fourth magnetic body 54, and the operation lever 2 is held at the first position R1 in the second tilting direction-side (an example of a second position), which is tilted in the second tilting direction by a second predetermined amount (see a tilt amount α2 in FIG. 2). Also, a click feeling is generated by a sudden change in the attraction force that occurs when the first magnetic body 51 is pulled apart from the permanent magnet 6.

Likewise, although not illustrated in the drawings, when the operation lever 2 is tilted in the first tilting direction from the initial state as illustrated in FIG. 10A, as described above, the first magnetic body 51 and the permanent magnet 6 tilt to the Z1 side. At this occasion, the permanent magnet 6 moves away to the Z1 side from the second magnetic body 52 which is restricted from tilting to the Z1 side. Therefore, the second magnetic body 52 is pulled apart from the permanent magnet 6. At this point in time, a click feeling is generated. That is, when the second magnetic body 52 is pulled apart from the permanent magnet 6, the attraction force decreases sharply, and when the operator tilts the operation lever 2 in the first tilting direction, the operating resistance felt by the operator decreases sharply, which generates a click feeling. Also, the first magnetic body 51 and the permanent magnet 6 are attracted to the third magnetic body 53 (not illustrated, see FIG. 10B for reference), and the operation lever 2 is maintained at the first position F1 in the first tilting direction-side.

In this manner, when the operation lever 2 is tilted from the initial state in the first tilting direction, the permanent magnet 6 and the first magnetic body 51 is separated from the second magnetic body 52 to the Z1 side, and the permanent magnet 6 attracts the third magnetic body 53, and the operation lever 2 is held at the first position F1 in the first tilting direction-side (an example of a first position), which is tilted in the first tilting direction by a first predetermined amount (see a tilt amount α1 in FIG. 2).

Further, although not illustrated in the drawings, when the operation lever 2 is tilted from a state in which the operation lever 2 is located at the first position F1 further in the first tilting direction (direction D1) upon being tilted in the third tilting direction (direction D3)(an example of a second axis direction), as described above, the support body 3 rotates with respect to the case body 110, and the first magnetic body 51, the permanent magnet 6, and the third magnetic body 53 tilt together to the Z1 side. Then, the first magnetic body 51, the permanent magnet 6, and the third magnetic body 53 are attracted to the fifth magnetic body 55.

In this manner, when the operation lever 2 is tilted from the first position F1 in the first tilting direction-side in the first tilting direction upon an operation for tilting the support body 3 in the third tilting direction (direction D3), the permanent magnet 6 and the first magnetic body 51 and the third magnetic body 53 attract the fifth magnetic body 55, and the operation lever 2 is held at the second position F2 in the first tilting direction-side (an example of a third position), which is tilted in the first tilting direction by a third predetermined amount (see a tilt amount α3 in FIG. 2).

According to the present embodiment explained above, the size of the shift device 100 can be reduced, and the durability can be improved. Specifically, according to the present embodiment, since the permanent magnet 6 is used to make a click feeling, the size of the shift device 100 can be reduced, and the durability can be improved as compared with the configuration using a compression coil spring. In contrast, in the above-described configuration using a compression coil spring, a sliding part for making a click feeling is provided, which is disadvantageous in terms of durability, and in addition, since the actuator is configured to be biased by the compression coil spring, the size of the operation device tends to increase.

In addition, according to the present embodiment, the fifth magnetic body 55 is provided, and therefore, two positions (i.e., the first position F1 and the second position F2) can be configured in the first tilting direction. In addition, according to the present embodiment, the second magnetic body 52 and the fourth magnetic body 54 are provided, and therefore, a position (i.e., the first position R1) can be configured in the second tilting direction.

In addition, according to the present embodiment, the support body 3 is rotatable with respect to the case body 110, and therefore, the operation lever 2 can be tilted in the third tilting direction (direction D3).

In addition, according to the present embodiment, a change between the first position F1 and the second position F2 requires an operation for tilting the support body 3 in the third tilting direction (direction D3), and therefore, a change between the first position F1 and the second position F2 against the user's intention can be reduced.

In addition, according to the present embodiment, the magnet holder 60 is integrally formed with the lever base portion 22, and therefore, the number of components can be reduced as compared with a case where the magnet holder 60 is separately formed and fixed to the lever base portion 22. In a modified embodiment, the magnet holder 60 may be separately formed and fixed to the lever base portion 22.

Although the embodiment has been described in detail above, the present invention is not limited to the specific embodiment, and various modifications and changes can be made within the scope of the claims. It is also possible to combine all or a plurality of the constituent elements of the above-described embodiment.

For example, in the embodiment explained above, the fourth magnetic body 54 and the fifth magnetic body 55 are provided, but the fourth magnetic body 54 may be omitted, the fifth magnetic body 55 may be omitted, or the fourth magnetic body 54 and the fifth magnetic body 55 may be omitted. When the fourth magnetic body 54 is omitted, the second magnetic body 52 may be configured to be non-rotatable with respect to the lever base portion 22.

Also, in the embodiment explained above, the support body 3 can be tilted in the third tilting direction (direction D3). Alternatively, the support body 3 may be tilted to a direction opposite in the third tilting direction (direction D3) or to both directions.

Also, in the embodiment explained above, the support body 3 is provided, but the support body 3 may be omitted. In this case, instead of the support body 3, the case body 110 serves as an example of a support body supporting the operation lever 2 to allow the operation lever 2 to be tilted from the reference position. Also, in this case, tilt operation of the operation lever 2 in the third tilting direction (direction D3) is disabled. Therefore, in this case, when the operation lever 2 is further titled from the state in which the operation lever 2 is located at the first position F1 in the first tilting direction (direction D1), as described above, the first magnetic body 51, the permanent magnet 6, and the third magnetic body 53 tilt together to the Z1 side. Then, the first magnetic body 51, the permanent magnet 6, and the third magnetic body 53 are attracted to the fifth magnetic body 55. As a result, the operation lever 2 is maintained at the second position F2 in the first tilting direction-side (an example of a third position).

Although the present disclosure describes specific embodiments of the invention, the present disclosure is not limited to the above embodiment, and various modifications can be made within the scope of the claims.

This application claims the priority to the priority application 2018-001177 filed on January 9, 2018, with the Japan Patent Office.

### REFERENCE SIGNS LIST

- 1: attractive force generating mechanism
- 2: operation lever
- 3: support body
- 3a: shaft portion
- 3b: bearing portion
- 6: permanent magnet
- 15: rotation shaft
- 22: lever base portion
- 31: first stopper
- 33: third stopper
- 51: first magnetic body
- 52: second magnetic body
- 53: third magnetic body
- 54: fourth magnetic body
- 55: fifth magnetic body
- 56: auxiliary permanent magnet
- 60: magnet holder
- 70: holder
- 100: shift device
- 110: case body
- 111: cover
- 111a: through-hole
- 112: shift knob
- 220: protruding portion
- 320: portion
- 530: notched portion
- 1101: restriction groove
- 1102: bearing portion

## Claims

1. An operation device comprising:
an operation member that is configured to be tilted;
a support body (3) configured to support the operation member, and to allow the operation member to be tilted from a reference position in one direction of a first axis direction;
a permanent magnet (6) configured to tilt to a first side in accordance with a tilt operation of the operation member in the one direction;
a first magnetic body (51) configured to face the first side of the permanent magnet (6) in an initial state in which the operation member is at the reference position, the first magnetic body (51) being configured to tilt in accordance with the tilt operation of the operation member from the reference position in the one direction, and being configured to be restricted from tilting in accordance with a tilt operation of the operation member from the reference position in another direction of the first axis direction;
a second magnetic body (52) configured to face a second side, opposite to the first side, of the permanent magnet (6) in the initial state, the second magnetic body (52) being configured to be restricted from tilting in accordance with the tilt operation of the operation member from the reference position in the one direction; and
a third magnetic body (53) configured to, in the initial state, face the permanent magnet (6) such that the third magnetic body (53) is farther away from the permanent magnet (6) toward the first side than the first magnetic body (51),
wherein when the operation member is tilted from the initial state in the one direction, the permanent magnet (6) and the first magnetic body (51) are separated from the second magnetic body (52) toward the first side, and then the permanent magnet (6) attracts the third magnetic body (53) to maintain the operation member at a first position tilted in the one direction by a first predetermined amount.

2. The operation device according to claim 1, wherein the support body (3) is further configured to support the operation member, and to allow the operation member to be tilted from the reference position in the another direction,
the permanent magnet (6) is further configured to tilt in accordance with the tilt operation of the operation member from the reference position in the another direction,
the second magnetic body (52) is configured to tilt to the second side in accordance with the tilt operation of the operation member in the another direction, and
the operation device further comprises a fourth magnetic body (54) configured to, in the initial state, face the permanent magnet (6) such that the fourth magnetic body (54) is farther away from the permanent magnet (6) toward the second side than the second magnetic body (52).

3. The operation device according to claim 2, wherein when the operation member is tilted from the initial state in the another direction, the permanent magnet (6) and the second magnetic body (52) are separated from the first magnetic body (51) toward the second side, and the permanent magnet (6) attracts the fourth magnetic body (54) to maintain the operation member at a second position tilted in the another direction by a second predetermined amount.

4. The operation device according to any one of claims 1 to 3, further comprising:
a fifth magnetic body (55) configured to, in the initial state, face the third magnetic body (53) such that the fifth magnetic body (55) is farther away from the permanent magnet (6) toward the first side than the third magnetic body (53).

5. The operation device according to claim 4, wherein when the operation member is tilted from the first position in the one direction, the permanent magnet (6) and the first magnetic body (51), together with the third magnetic body (53), attract the fifth magnetic body (55)to maintain the operation member at a third position tilted in the one direction by a third predetermined amount.

6. The operation device according to any one of claims 1 to 3, further comprising:
a housing configured to support the support body (3) to allow the support member to be tilted in a second axis direction orthogonal to the first axis direction.

7. The operation device according to claim 6, further comprising:
a fifth magnetic body (55) configured to, in the initial state, face the third magnetic body (53) such that the fifth magnetic body (55) is farther away from the permanent magnet (6) toward the first side than the third magnetic body (53),
wherein when the operation member is tilted from the first position in the one direction upon an operation for tilting the support body (3) to the second axis direction, the permanent magnet (6) and the first magnetic body (51), together with the third magnetic body (53), attract the fifth magnetic body (55) to maintain the operation member at a third position tilted in the one direction by a third predetermined amount.

## Patentansprüche

1. Eine Bedienungsvorrichtung, aufweisend:
ein Bedienelement, welches konfiguriert ist, um gekippt zu werden;
einen Stützkörper (3), welcher konfiguriert ist, um das Operationselement zu stützen und um zu ermöglichen, dass das Bedienelement aus einer Referenzposition in eine Richtung einer ersten Achsenrichtung kippt;
einen Permanentmagneten (6), welcher konfiguriert ist, um zu einer ersten Seite in Übereinstimmung mit einer Kippoperation des Bedienelements in der einen Richtung zu kippen;
einen ersten Magnetkörper (51), welcher so konfiguriert ist, dass er der ersten Seite des Permanentmagneten (6) in einem Anfangszustand zugewandt ist, in welchem sich das Bedienelement in der Referenzposition befindet,
wobei der erste Magnetkörper (51) konfiguriert ist, um in Übereinstimmung mit der Kippoperation des Bedienelements von der Referenzposition in der einen Richtung zu kippen, und konfiguriert ist, um vom Kippen in Übereinstimmung mit einer Kippoperation des Bedienelements von der Referenzposition in einer anderen Richtung der ersten Achsenrichtung beschränkt zu werden;
einen zweiten Magnetkörper (52), welcher so konfiguriert ist, dass er eine zweite Seite, welche der ersten Seite gegenüberliegt, des Permanentmagneten (6) in dem Anfangszustand zugewandt ist, wobei der zweite Magnetkörper (52) konfiguriert ist, um vom Kippen in Übereinstimmung mit der Kippoperation des Bedienelements von der Referenzposition in die eine Richtung beschränkt zu werden; und
einen dritten Magnetkörper (53), welcher konfiguriert ist in dem Anfangszustand den Permanentmagneten (6) zugewandt zu sein, sodass der der dritte Magnetkörper (53) weiter entfernt ist von dem Permanentmagneten (6) in Richtung der ersten Seite als der erste Magnetkörper (51),
wobei, wenn das Bedienelement von dem Anfangszustand in die eine Richtung gekippt ist, der Permanentmagnet (6) und der erste Magnetkörper (51) von dem zweiten Magnetkörper (2) in Richtung der ersten Seite getrennt sind, und dann zieht der Permanentmagnet (6) den dritten Magnetkörper (53) an, um das Bedienelement in einer ersten Position zu halten, welche in der einen Richtung um einen ersten vorbestimmten Betrag gekippt ist.

2. Die Bedienungsvorrichtung gemäß Anspruch 1,
wobei der Stützkörper (3) ferner konfiguriert ist, um das Bedienelement zu stützen und zu ermöglichen, dass das Bedienelement von der Referenzposition in die andere Richtung gekippt werden kann,
wobei der Permanentmagnet (6) ferner konfiguriert ist, um in Übereinstimmung mit der Kippoperation des Bedienelements von der Referenzposition in die andere Richtung zu kippen,
wobei der zweite Magnetkörper (52) konfiguriert ist, um zu der zweiten Seite in Übereinstimmung mit der Kippoperation des Bedienelements in der anderen Richtung zu kippen, und
die Bedienungsvorrichtung ferner einen vierten Magnetkörper (54) aufweist, welcher konfiguriert ist, um im Ausgangszustand dem Permanentmagneten (6) derart zugewandt zu sein, dass der vierte Magnetkörper (54) weiter von dem Permanentmagneten (6) entfernt ist in Richtung der zweiten Seite als der zweite Magnetkörper (52).

3. Die Bedienungsvorrichtung gemäß Anspruch 2, wobei
wenn das Bedienelement von dem Ausgangszustand in die andere Richtung gekippt wird, der Permanentmagnet (6) und der zweite Magnetkörper (52) von dem ersten Magnetkörper (51) in Richtung der zweiten Seite getrennt werden und der Permanentmagnet (6) den vierten Magnetkörper (54) anzieht, um das Bedienelement in einer zweiten Position zu halten, welche in die andere Richtung um einen zweiten neu bestimmten Betrag gekippt ist.

4. Die Bedienungsvorrichtung gemäß einem der Ansprüche 1 bis 3, welche ferner aufweist:
einen fünften Magnetkörper (55), welcher so konfiguriert ist, dass er im Ausgangszustand dem dritten Magnetkörper (53) zugewandt ist, so dass der fünfte Magnetkörper (55) weiter von dem Permanentmagneten (6) in Richtung der ersten Seite entfernt ist als der dritte Magnetkörper (53).

5. Die Bedienungsvorrichtung gemäß Anspruch 4, wobei
wenn das Bedienelement von der ersten Position in der einen Richtung gekippt ist, der Permanentmagnet (6) und der erste Magnetkörper (51) zusammen mit dem dritten Magnetkörper (53) den fünften Magnetkörper (55) anziehen, um das Bedienelement in einer dritten Position zu halten, die in der einen Richtung um einen dritten vorbestimmten Betrag gekippt ist.

6. Die Bedienungsvorrichtung gemäß einem der Ansprüche 1 bis 3, ferner aufweisend:
ein Gehäuse, konfiguriert, um den Stützkörper (3) zu stützen um zu ermöglichen, dass das Stützelement in einer zweiten Achsrichtung orthogonal zur ersten Achsenrichtung gekippt werden kann.

7. Die Bedienungsvorrichtung gemäß Anspruch 6, welche ferner aufweist:
einen fünften Magnetkörper (55), konfiguriert, um im Ausgangszustand dem dritten Magnetkörper (53) derart zugewandt zu sein, dass der fünfte Magnetkörper (55) weiter von dem Permanentmagneten (6) in Richtung der ersten Seite entfernt ist als der dritte Magnetkörper (53),
wobei, wenn das Bedienelement von der ersten Position in der einen Richtung bei einer Operation zum Kippen des Stützkörpers (3) in die zweite Achsenrichtung gekippt wird, der Permanentmagnet (6) und der erste Magnetkörper (51) zusammen mit dem dritten Magnetkörper (53) den fünften Magnetkörper (55) anziehen, um das Bedienelement in einer dritten Position zu halten, welche in der einen Richtung um einen dritten vorbestimmten Betrag gekippt ist.

## Revendications

1. Dispositif d'actionnement comprenant :
un organe d'actionnement qui est configuré pour être incliné ;
un corps de support (3) configuré pour supporter l'organe d'actionnement et pour permettre d'incliner l'organe d'actionnement depuis une position de référence dans une direction d'une première direction axiale ;
un aimant permanent (6) configuré pour s'incliner vers un premier côté conformément à un actionnement d'inclinaison de l'organe d'actionnement dans ladite une direction ;
un premier corps magnétique (51) configuré pour être en regard du premier côté de l'aimant permanent (6) dans un état initial dans lequel l'organe d'actionnement est à la position de référence, le premier corps magnétique (51) étant configuré pour s'incliner conformément à l'actionnement d'inclinaison de l'organe d'actionnement depuis la position de référence dans ladite une direction, et étant configuré pour être limité dans son inclinaison conformément à un actionnement d'inclinaison de l'organe d'actionnement depuis la position de référence dans une autre direction de la première direction axiale ;
un deuxième corps magnétique (52) configuré pour être en regard d'un second côté, opposé au premier côté, de l'aimant permanent (6) dans l'état initial, le deuxième corps magnétique (52) étant configuré pour être limité dans son inclinaison conformément à l'actionnement d'inclinaison de l'organe d'actionnement depuis la position de référence dans ladite une direction ; et
un troisième corps magnétique (53) configuré pour, dans l'état initial, être en regard de l'aimant permanent (6) de sorte que le troisième corps magnétique (53) soit plus éloigné de l'aimant permanent (6) vers le premier côté que le premier corps magnétique (51),
dans lequel lorsque l'organe d'actionnement est incliné depuis l'état initial dans ladite une direction, l'aimant permanent (6) et le premier corps magnétique (51) sont séparés du deuxième corps magnétique (52) vers le premier côté, puis l'aimant permanent (6) attire le troisième corps magnétique (53) pour maintenir l'organe d'actionnement à une première position incliné dans ladite une direction d'une première quantité prédéterminée.

2. Dispositif d'actionnement selon la revendication 1, dans lequel le corps de support (3) est en outre configuré pour supporter l'organe d'actionnement, et pour permettre d'incliner l'organe d'actionnement depuis la position de référence dans l'autre direction,
l'aimant permanent (6) est en outre configuré pour s'incliner conformément à l'actionnement d'inclinaison de l'organe d'actionnement depuis la position de référence dans l'autre direction,
le deuxième corps magnétique (52) est configuré pour s'incliner vers le second côté conformément à l'actionnement d'inclinaison de l'organe d'actionnement dans l'autre direction, et
le dispositif d'actionnement comprend en outre un quatrième corps magnétique (54) configuré pour, dans l'état initial, être en regard de l'aimant permanent (6) de sorte que le quatrième corps magnétique (54) soit plus éloigné de l'aimant permanent (6) vers le second côté que le deuxième corps magnétique (52).

3. Dispositif d'actionnement selon la revendication 2, dans lequel, lorsque l'organe d'actionnement est incliné depuis l'état initial dans l'autre direction, l'aimant permanent (6) et le deuxième corps magnétique (52) sont séparés du premier corps magnétique (51) vers le second côté, et l'aimant permanent (6) attire le quatrième corps magnétique (54) pour maintenir l'organe d'actionnement à une deuxième position incliné dans l'autre direction d'une deuxième quantité prédéterminée.

4. Dispositif d'actionnement selon l'une quelconque des revendications 1 à 3, comprenant en outre :
un cinquième corps magnétique (55) configuré pour, dans l'état initial, être en regard du troisième corps magnétique (53) de sorte que le cinquième corps magnétique (55) soit plus éloigné de l'aimant permanent (6) vers le premier côté que le troisième corps magnétique (53).

5. Dispositif d'actionnement selon la revendication 4, dans lequel, lorsque l'organe d'actionnement est incliné depuis la première position dans ladite une direction, l'aimant permanent (6) et le premier corps magnétique (51), conjointement avec le troisième corps magnétique (53), attirent le cinquième corps magnétique (55) pour maintenir l'organe d'actionnement à une troisième position incliné dans ladite une direction d'une troisième quantité prédéterminée.

6. Dispositif d'actionnement selon l'une quelconque des revendications 1 à 3, comprenant en outre :
un logement configuré pour supporter le corps de support (3) pour permettre d'incliner l'organe de support dans une seconde direction axiale orthogonale à la première direction axiale.

7. Dispositif d'actionnement selon la revendication 6, comprenant en outre :
un cinquième corps magnétique (55) configuré pour, dans l'état initial, être en regard du troisième corps magnétique (53) de sorte que le cinquième corps magnétique (55) soit plus éloigné de l'aimant permanent (6) vers le premier côté que le troisième corps magnétique (53),
dans lequel, lorsque l'organe d'actionnement est incliné depuis la première position dans ladite une direction lors d'un actionnement permettant d'incliner le corps de support (3) vers la seconde direction axiale, l'aimant permanent (6) et le premier corps magnétique (51), conjointement avec le troisième corps magnétique (53), attirent le cinquième corps magnétique (55) pour maintenir l'organe d'actionnement à une troisième position incliné dans ladite une direction d'une troisième quantité prédéterminée.
